# EUROPEAN PATENT APPLICATION

(11) **EP 1 376 071 A2**
(43) Date of publication of application: **02.01.2004**
(21) Application number: 03019624.0
(22) Date of filing: 15.06.1988
(51) Int. Cl.: G01F 1/684, G01F 5/00

(54) **Air-flow meter for internal combustion engines**

(30) Priority: 17.06.1987 JP 14899387
(62) Divisional of application: 01112908.7
(71) Applicant: Hitachi, Ltd., Chiyoda-ku, Tokyo 101-8010 (JP)
(72) Inventor: Arai, Nobukatsu, Ushiku-shi (JP); Sekine, Yoshihito, Saitama-shi Saitama-ken (JP); Osawa, Tadao, Katsuta-shi (JP); Tokuda, Hiroatsu, Katsuta-shi (JP); Usui, Toshifumi, Katsuta-shi (JP); Tsutsui, Mitsukuni, Naka-gun, Ibaraki-ken (JP)
(74) Representative: Beetz & Partner Patentanwälte

(57) **Abstract**

The invention relates to an air flow meter having an element which detects an air flow rate comprising a block (230) in which an auxiliary flow path (242) is formed,
wherein the block (230) is inserted through a wall of a body (240) forming a primary flow path (241) and constituting an intake air passage of an internal combustion engine in a cantilever condition in the primary flow path (241),
wherein the auxiliary flow path (242) having an inlet portion directed against the direction of the primary air flow in the primary flow path (242) and having a curved portion, wherein the block (230) is detachably mounted to the body (240).

## Description

The present invention relates to an air flow meter for internal combustion engines for detecting a flow rate of intake air.

As shown in, for example, JP-U-56-135127 and JP-A-60-185118, there has been provided a conventional passage structure for a hot-wire type air-flow meter for automotive engines, in which an auxiliary flow path is formed in the intake pipe; a hot-wire element is arranged in the auxiliary flow path; an obstacle or a complicated bent flow path which is long in the axial direction is provided downstream of the hot-wire element for the purpose of protecting the hot-wire element against backfiring or backblowing of the engine and for the purpose of preventing an abnormal output of the hot-wire element caused by pulsations of the engine. In such an air-flow meter, since the auxiliary path portion including the hot-wire element is formed in such manner as to be exposed to the primary flow, the output error caused by a temperature increase of the flow meter body is small. However, this arrangement requires a long physical length in the axial direction and a large number of mechanical parts which makes assembly difficult. Therefore, this arrangement suffers from disadvantages regarding compactness and cost.

Also, as disclosed in, for example, JP-A-57-23818 and 57-113926, there has been proposed an arrangement in which a hot-wire type air-flow meter and throttle valve means are disposed close to each other in an integral body. In JP-A-57-23818, the same techniques as those in the foregoing two publications are adopted in the arrangement in which the auxiliary passage within which the hot-wire element is disposed is defined by a straight pipe and is formed in the central portion of the primary passage. However, in the publication JP-A-57-23818, there are no protection means provided for the hot-wire element against backfiring and backblowing of the engine. The throttle valve being provided downstream of the auxiliary flow path may serve to protect the hot-wire element under the condition it is almost closed. However, the throttle valve has no function as protection means under full or almost full open condition. Also, in addition, this arrangement suffers from the further problem that the flow within the auxiliary flow path is affected by the movement of the throttle valve which renders the flow unstable. In JP-A-57-113926, an air-flow meter is described in which the hot-wire element is disposed in an auxiliary flow path, which extends within the wall of the body having a large thermal capacity and a relatively limited heat transfer area and which is defined by an L-shaped structure consisting of a first flow path parallel to the primary flow and a second flow path perpendicular to the first flow path. With such an arrangement, it is possible to protect the hot-wire element against backblowing or backfiring of the engine. However, due to the structure of the auxiliary flow path, since the air of the primary flow cannot flow around the auxiliary flow path wall, the temperature of the auxiliary flow path wall is highly increased due to the heat generated by the hot-wire element and the heat transferred from the engine.

As a result, the air within the auxiliary flow path is heated giving rise to a large difference in temperature between the air in the auxiliary flow path and the air in the primary flow path. Thus, it is impossible to exactly measure the flow rate of the intake air.

US-A-4 393 697 discloses an air-flow meter with an axially extending auxiliary flow path provided within the primary flow path at the outlet and of which a wall is arranged for backfiring protection.

US-A-4 527 423 discloses a hot-wire air-flow meter comprising a primary flow path and an auxiliary flow path consisting of an axially extending inlet portion and an outlet portion perpendicular to the inlet portion, wherein the auxiliary flow path is completely provided within the body of the air-flow meter. Upstream of the level of the inlet opening of the auxiliary flow path the primary flow path has a larger diameter than downstream thereof, forming a shoulder at the level of the inlet opening of the auxiliary flow path.

In EP-A-173 946 an air-flow meter is described where the auxiliary flow path is located substantially in the central portion of the primary flow path. It comprises an axial inlet portion and a radial outlet portion of short axial length. According to this prior art, the flow through the auxiliary flow path is first axial in the axial inlet portion, is then deviated by 180° to be axial again in counterflow direction, and enters thereafter into a radial part comprising an outlet opening provided such that the air-flow impinges against the inner wall of the air-flow meter body. According to this construction, the portion projecting from the inner wall of the primary flow path and carrying the auxiliary flow path cannot be formed integrally with the air-flow meter body.

The foregoing prior art is silent with respect to the reduction of the pipe path length between the hot-wire type air-flow meter and the throttle valve means. Therefore, the prior art suffers from the problems of an increased pressure loss in the intake passage and of increased weight and cost of the equipment. Moreover, the prior art encounters the following difficulties: The heat generation of the hot-wire element; the temperature increase of the auxiliary flow path wall around the hot-wire element due to the heat input from the outside, that is, an error due to the difference between the temperature of the actual intake air and the temperature of the air flowing through the auxiliary flow path while impinging against the hot-wire element and the temperature compensation element; countermeasures against a change of the ratio of the flow rate of the primary flow and the auxiliary path due to swirls or a change of the intake air or a change of the flow downstream of the air-flow meter; a reduction of flow turbulence within the auxiliary flow path, that is, a reduction of the output noise; a protection of the elements against counterflow due to backblowing or backfiring and the countermeasures against abnormal output due to pulsations.

An object of the present invention is to provide an air-flow meter which is compact, has a high measuring precision and an improved backfiring protection.

The above object is achieved according to the independent claim. The dependent claims relate to preferred embodiments.

According to the present invention, the hot-wire element is disposed in an auxiliary flow path independent of the primary flow path, thereby reducing adverse effects of turbulence in the primary flow path. Also, in the auxiliary flow path having a small diameter relative to that of the primary flow path, the distance between the auxiliary flow path inlet and the hot-wire element is twice longer than the diameter of the auxiliary flow path or more, thereby performing a rectification of the flow to reduce the noise. Also, the auxiliary flow path is bent downstream of the element, so that the flow at the bent portion and the pressure damping effect prevent a damage of the hot-wire element due to counterflow and reduce the adverse effects of pulsation. According to the present invention, the distance from the inlet of the auxiliary flow path to the hot-wire element is twice longer than the diameter of the auxiliary flow path or more, and the inlet of the auxiliary flow path is constructed such that it projects into the primary flow path at a constant distance from the inner wall of the body or a portion connecting the body inner wall and the auxiliary flow path. Furthermore, the bent auxiliary flow path having a flow path wall of the projecting portion wall has a short axial length downstream of the hot-wire element and may be coupled substantially directly to throttle valve means, whereby various problems due to noise, pulsation and counterflows are solved.

In the following, the invention will be explained with reference to preferred embodiments and to the drawings.
Fig. 1 is a cross-sectional view showing one embodiment of the invention;
Fig. 2 is a cross-sectional view taken along the line II-II of Fig. 1;
Fig. 3 is a cross-sectional view taken along the line III-III of Fig. 1;
Fig. 4 is a cross-sectional view showing another embodiment of the invention;
Fig. 5 is a cross-sectional view taken along the line V-V of Fig. 4;
Fig. 6 is a cross-sectional view taken along the line VI-VI of Fig. 4;
Fig. 7 is a cross-sectional view showing another embodiment of the invention;
Fig. 8 is a cross-sectional view taken along the line VIII-VIII of Fig. 7;
Fig. 9 is a cross-sectional view showing another embodiment of the invention;
Fig. 10 is a cross-sectional view taken along the line X-X of Fig. 9;
Fig. 11 is a cross-sectional view showing another embodiment of the invention;
Fig. 12 is a cross-sectional view taken along the line XII-XII of Fig. 11;
Fig. 13 is a cross-sectional view showing another embodiment of the invention;
Fig. 14 is a cross-sectional view taken along the line XIV-XIV of Fig. 13;
Fig. 15 is a cross-sectional view taken along the line XV-XV of Fig. 13;
Fig. 16 is a cross-sectional view showing a part of an auxiliary flow path according to an embodiment of the invention;
Fig. 17 is a cross-sectional view taken along the line XVII-XVII of Fig. 16;
Fig. 18 is a cross-sectional view showing a part of an auxiliary flow path according to another embodiment of the invention;
Fig. 19 is a cross-sectional view taken along the line XIX-XIX of Fig. 18;
Fig. 20 is a cross-sectional view showing another embodiment of the invention;
Fig. 21 is a cross-sectional view taken along the line XXI-XXI of Fig. 20;
Fig. 22 is a cross-sectional view showing another embodiment of the invention;
Fig. 23 is a cross-sectional view taken along the line XXIII-XXIII of Fig. 22;
Figs. 24, 25 and 26 are cross-sectional views showing other embodiments of the invention;
Fig. 27 is a cross-sectional view taken along the line XXVIII-XXVIII of Fig. 26;
Fig. 28 shows a modification of a part shown in Fig. 26; and
Fig. 29 is a view showing a system of an electronic fuel injection means according to the present invention.

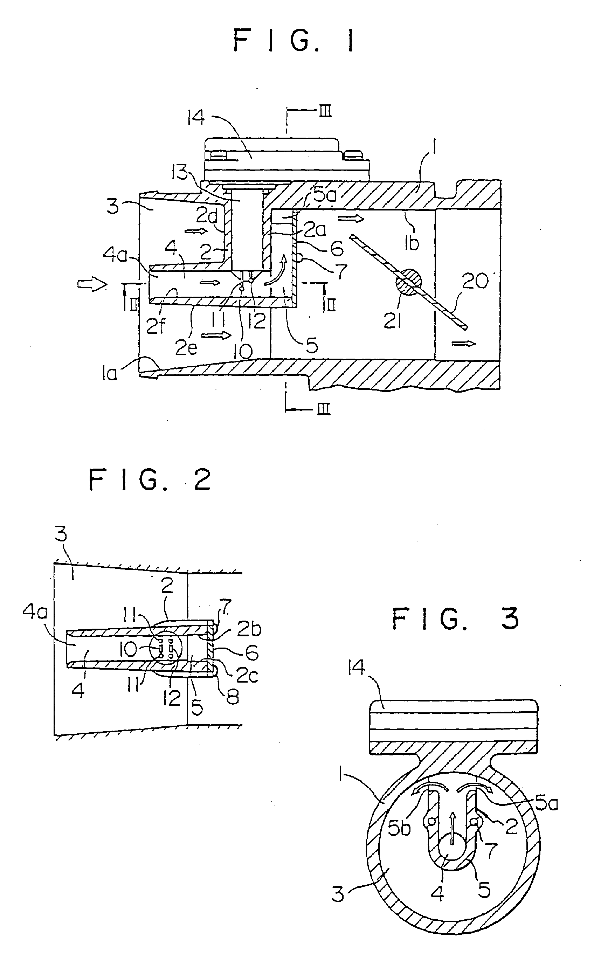

One embodiment of the present invention will now be described with reference to Figs. 1, 2 and 3. The body 1 constitutes the intake passage of an internal combustion engine. The intake air is introduced from the left side of the embodiment shown in Fig. 1. The internal combustion engine is connected downstream of the flow.

The body 1 forms a substantially cylindrical primary flow path 3. A projecting portion 2 which is formed integrally with the body 1 is disposed in the primary flow path 3. At the tip end of the projecting portion 2, an auxiliary flow path 4 is provided which is parallel to the primary flow path 3 and has an inlet opening 4a at the central portion of the primary flow path 3. Also, a hole in communication with the outside of the body 1 is formed in the projecting portion 2. A molded unit 13 of a support member 11 for a hot-wire element 10 connected to a circuit unit 14 is positioned in this hole. Accordingly, the hot-wire element 10 and a temperature compensation element 12 are disposed in the auxiliary flow path 4. Downstream of the axially extending auxiliary flow path 4, the bent auxiliary flow path having a short axial length is formed by walls 2a, 2b and 2c of the projecting portion 2 and a cover 6. A throttle valve 20 controlling the total air flow rate is disposed downstream of the bent auxiliary flow path 5. The throttle valve 20 is opened/closed by a valve drive shaft 21. A link mechanism (not shown) connected to the shaft 21 is provided outside the body 1. The link mechanism is normally driven by a cable connected to the accelerator pedal of the vehicle. Incidentally, the cover 6 is threadedly mounted to the rear end of the projecting portion 2 by bolts 7 and 8 prior to the mounting of the throttle valve 20 and the valve drive shaft 21.

The distance between the inlet opening 4a of the auxiliary flow path and the inner wall 1a of the body 1 and also the wall 2d of the connecting portion between the projecting portion 2 and the body 1 is twice longer than the inner diameter of the auxiliary flow path 4 or longer. Also, the inlet opening 4a is in the form of a bellmouth.

The inner wall 1a of the body 1 and the outer wall 2e or the like forming the auxiliary flow path 4 of the projecting portion 2 are configured so that the flow path expands toward the upstream side. On the other hand, the inner wall 1b of the body 1 at which the throttle valve 20 is provided is finished by machining in such manner as to have constant diameter as other's. Before the machining work, the wall 1b is in the form of a cone converging toward the left side of Fig. 1. With such a technique, the flow path may be cast-molded by using removable core molds having a division plane in the vicinity of the wall 2a of the projecting portion. The core molds may be removed in the right and left directions.

The blank arrows indicate the flow of air. Although most of the air entering from the left hand side in Fig. 1 will flow through the primary flow path 3, a part of the air will be introduced into the auxiliary flow path 4. Since the inlet opening 4a of the auxiliary flow path 4 is sufficiently separated from the walls 1a and 2b, a flow of a relatively low turbulence is introduced into the auxiliary flow path 4.

Also, the bellmouth of the inlet 4a of the auxiliary flow path 4 entrains a large amount of air to thereby increase the flow speed in the vicinity of the inner wall 2f of the auxiliary flow path 4. However, the friction effect of the inner wall 2f of the auxiliary flow path 4 up to the hot-wire element causes the flow within the auxiliary flow path 4 to be sufficiently rectified so that the flow immediately before the hot-wire element 10 has a uniform flow speed distribution.

The ratio of the inlet diameter of the bellmouth to the diameter of the auxiliary flow path 4 is in the range of 1.6 to 1.2. correspondingly, the ratio of the distance from the inlet to the hot-wire element 10 to the diameter of the auxiliary flow path 4 is in the range from about 4 to 2. However, this relation is changed in accordance with the actual diameter of the auxiliary flow path 4 and therefore is not a so-called one-to-one relation.

Downstream of the hot-wire element 10, the flow is curved upwardly to be introduced into the bent auxiliary flow path 5 impiuges subsequently against the inner wall of the body and then flows out to the right and left side through the outlets 5a and 5b to be immerged into the main flow. Such an arrangement of the flow path damps the backflow from the engine and prevents the propagation of pulsations to the vicinity of the hot-wire element 10.

According to the foregoing embodiment, with a short axial dimension of the outlet portion 5, it is possible to provide a hot-wire type air-flow meter for internal combustion engines; which is free from various problems like noise due to the turbulence of the flow, unstable outputs due to the effect of pulsations and a damage of the hot-wire element due to backblowing of the engine. Namely, the compactness, the lightweight and the low cost are advantageous. The flow meter body and the throttle valve unit body that could not be formed integrally in the prior art may be formed in a single integral body unit. Since the length of the intake passage is reduced, the arrangement permits to reduce an undue pressure loss, is of light weight and may be manufactured at low cost.

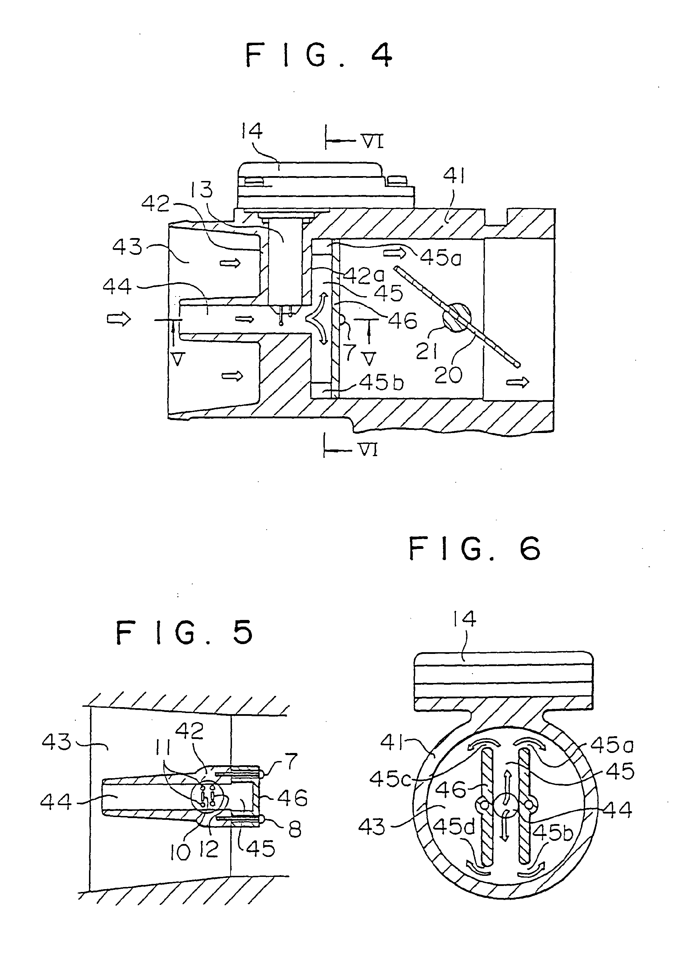

Figs. 4 to 6 show a second embodiment of the invention. The difference in comparison with the first embodiment shown in Figs. 1 to 3 will be explained. The projecting portion 42 is fomed integrally with the upper and lower walls of the body 41 (or is integrally formed with the right and left walls of the body, i.e., in the axial direction of the throttle valve drive shaft 21, if desired). With such an arrangement, it is possible to form bent auxiliary flow paths 45 downstream of the auxiliary flow path 44 in the up and down directions. Also, the outlet surface of the auxiliary flow path 44, i.e. the rear end face 42a of the projecting portion 42, is designed as a flat surface. This facilitates the machining work because of the reduction of the surface roughness. Also, the auxiliary flow path cover 46 is formed in an U-shape in cross-section unlike the simple planar plate shown in the first embodiment. The cover 46 is also mounted on the rear end face of the projecting portion 42 by means of bolts 7 and 8. Since the auxiliary flow path is made of a member separated from the body it is possible to finish the rear end face 42a of the projecting portion 42. Therefore, it is possible to reduce the surface roughness of the inner surface of the bent auxiliary flow paths 45 as a whole. Also, it is possible to obtain a good sealing effect on the connecting portions. This is effective to avoid the case where the performance of the hot-wire element 10 is unstable due to the unstability of the flow within the bent auxiliary flow paths and insufficient pressure seal against the primary flow path.

It is apparent that, in the first embodiment, the same effect as in the second embodiment may be ensured by making the rear end face of the projecting portion 2 flat and using the U-shaped cover 46 instead of the planar cover 6.

The effect of the second embodiment in which the bent auxiliary flow paths 45 are provided in the up and down directions is the interference effect in front of the auxiliary flow path 44 in the case where pulsations occur. Namely, the second embodiment is more available against pulsations. However, in the second embodiment, since the flow path resistance is decreased, it is desired that some modifications such as a reduction of the area of the outlets 45a to 45d be made in conformity with the engine.

There is no structural difference between the first and second embodiments.

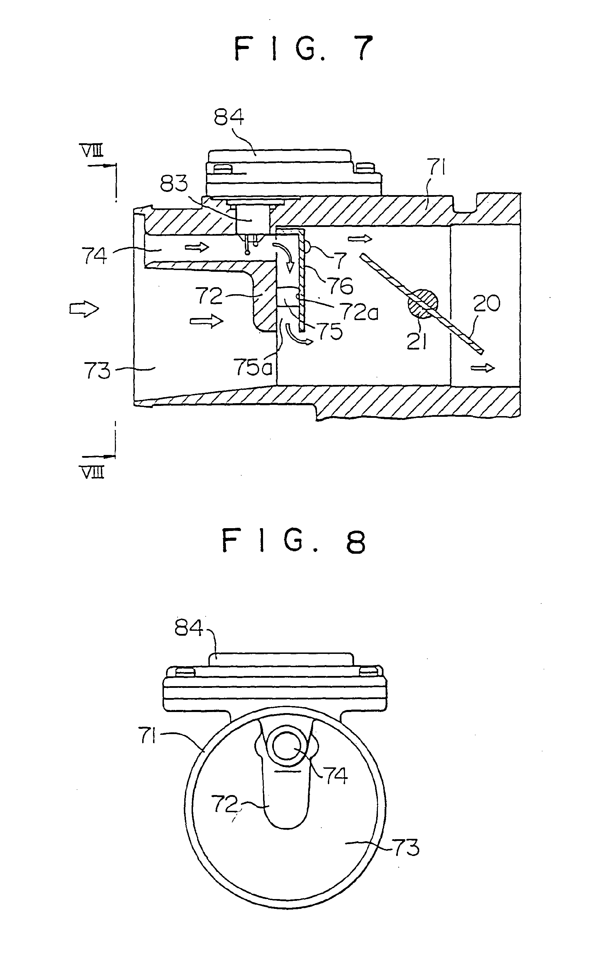

Figs. 7 and 8 show a third embodiment of the invention. An auxiliary flow path 74 in parallel to the primary flow path 73 is provided at a portion near the inner wall of the body 71 rather than the tip end of the projecting portion 72 from the body 71. The bent auxiliary flow path 75 downstream of the auxiliary flow path 74 is defined by a rear end wall 72a of the projecting portion 72 and an auxiliary flow path cover 76 mounted on the wall 72a by a bolt 7. The rear end portion of the projecting portion 72 extends close to the central portion of the primary flow path 73. Therefore, the flow within the bent auxiliary flow path 75 is fist directed from the inner circumferential wall of the body 71 along the wall 72a toward the central portion of the primary flow path 73. Then, the air is made to flow from the bent auxiliary flow path outlet 75a toward the right and left and then downwardly. Downstream of the bent path 75, the throttle valve 20 and the drive shaft 21 are disposed within the integral body in the same manner as in the first and second embodiments.

According to the features of the third embodiment, it is possible to reduce the length of the molded portion 83 integral with the circuit unit 84, which is available at low cost. Also, since the projecting portion 72 may be relatively short, it is possible to reduce the flow resistance of the primary flow path 73. Further, since the mass corresponding to the overhand portion is small, the structure is advantageous against the vibrations in comparison with the first embodiment. However, the turbulence in the flow entering into the auxiliary flow path 74 is somewhat larger. Therefore, it is desired that, for that reason, the diameter of the bellmouth be enlarged and the distance to the hot-wire element 10 of the auxiliary flow path 74 be elongated.

The basic effect of the third embodiment is substantially the same as that of the first embodiment.

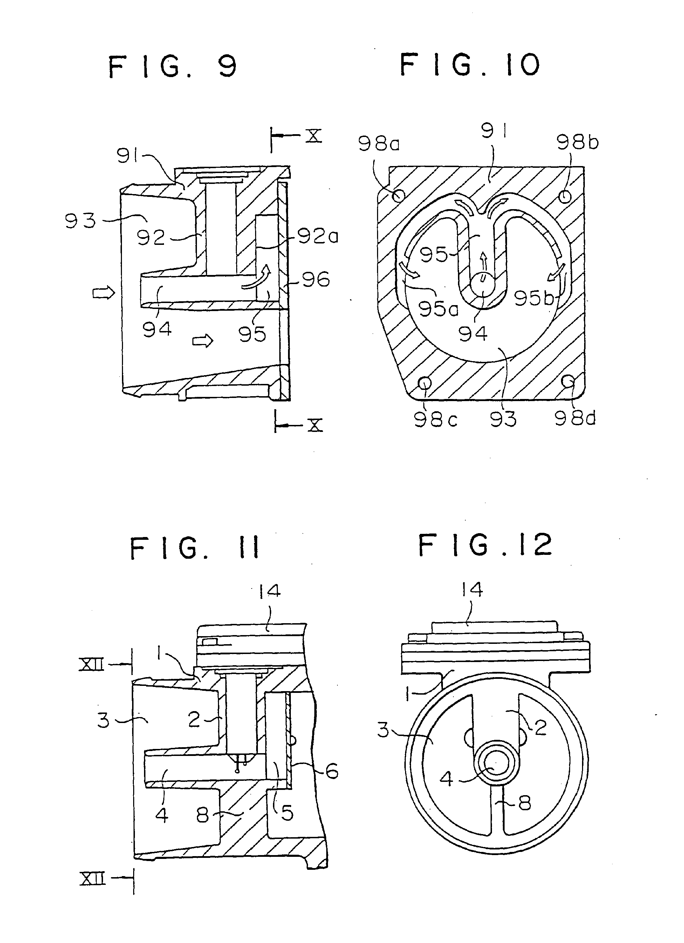

Figs. 9 and 10 show a fourth embodiment of the invention.

Unlike the first through third embodiments, the body 91 is made of a single unit of a hot-wire type flowmeter.

The projecting portion 92 is formed substantially in the same manner as the first embodiment. An auxiliary flow path 94 is formed at the end of the projecting portion 92. A part of the bent auxiliary flow path 95 is formed along the rear end face 92a of the projecting portion 92. The rest of the bent auxiliary flow path 95 is formed so as to project outside the primary flow path 93 and to enter the body 91 to be branched into the right and left sides from the upper side in the range of about 90 degrees as shown in Fig. 10. Therefore, the outlets of the bent auxiliary flow path 95 are located on both sides as shown in Fig. 10. The flow path surface of the portion downstream of the bent auxiliary flow path 95 is formed by a gasket 96. Namely, the body of the throttle valve unit which is independent of the flow meter body 91 is coupled through the gasket to the air-flow meter body with bolt holes 98a to 98d. Path 95 may be elongated, the Since the bent auxiliary flow path 95 may be elongated, the fourth embodiment may be applied to engines producing large pulsations.

Figs. 11 and 12 show a fifth embodiment of the invention, in which a reinforcement rib 8 is added to the structure shown in the first embodiment. More specifically, there are provided a part for forming the auxiliary flow path 4 at the tip end of the projecting portion 2 of the first embodiment and a rib 8 connected to the opposite inner wall of the body 1. With such an arrangement, it is possible to increase the strength and to reduce deformations of the projecting portion 2 during cast molding. The other effects are the same as those of the first embodiment.

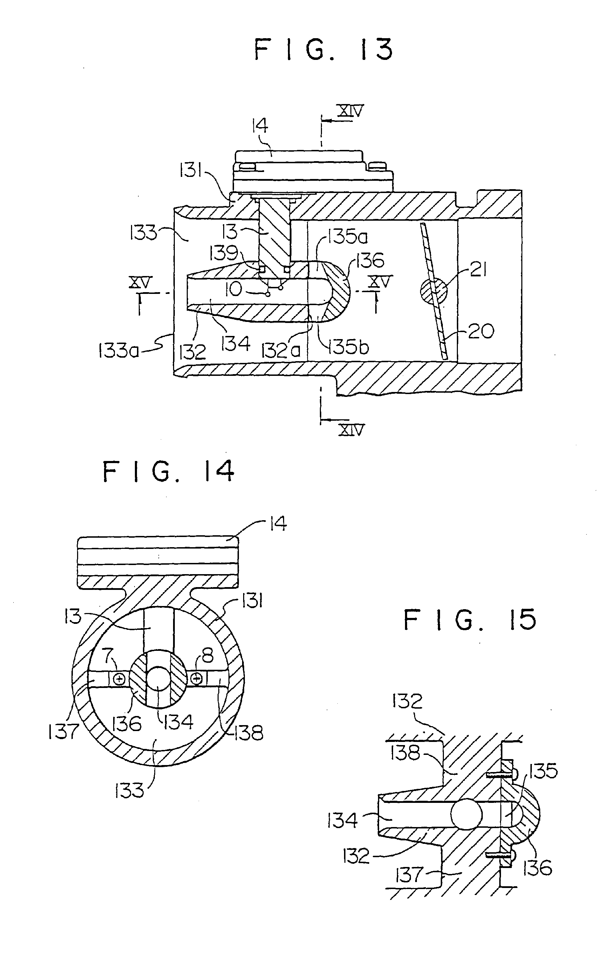

Figs. 13 to 15 show a sixth embodiment of the invention. The projecting portion 132 from the body 131 is formed by ribs 137 and 138 formed in a direction perpendicular to the mold portion 13 connected to the circuit unit 14 and a cylindrical portion 132 defining the auxiliary flow path 134. Therefore, the molded portion 13 of the circuit unit 14 passes through the wall of the body 131, crosses the primary flow path 133 and penetrates into a hole of the projecting portion 132, so that the hot-wire element 10 is disposed within the auxiliary flow path 134. An 0-ring 139 is disposed at the portion of the molded portion 13 inserted into the hole of the projecting portion 132. The 0-ring 139 serves for sealing between the primary flow path 133 and the auxiliary flow path 134. A bent auxiliary flow path 135 is defined by the rear end face of the projecting portion 132 and the cover 136. Two outlets 135a and 135b are formed in the up and down directions of the cover 136. The outlets 135a and 136b are formed so that the flow therethrough is rather returned back to the upstream side. This is because the length of the bent auxiliary flow path is short, and the orientation of the outlets may compensate therefor.

The advantage of this embodiment is that, since the projecting portions 137, 138 and 132 are located in the direction of the throttle valve drive shaft 21 which is inherently an obstacle or a block against the primary flow path 133, it is possible to reduce the flow resistance within the primary flow path 133. Also, in this embodiment, the inlet portion 133a of the primary flow path 133 is in the form of a bellmouth to thereby achieve the rectifying effect. In the various embodiments of the invention which have been described it is apparent that the cover member of the bent auxiliary flow path is not necessarily mounted by bolts. Any other mounting means such as bonding or adhesive may be used, and it is possible to seal the contact portion of the projecting portion rear face and the cover with a sealing material.

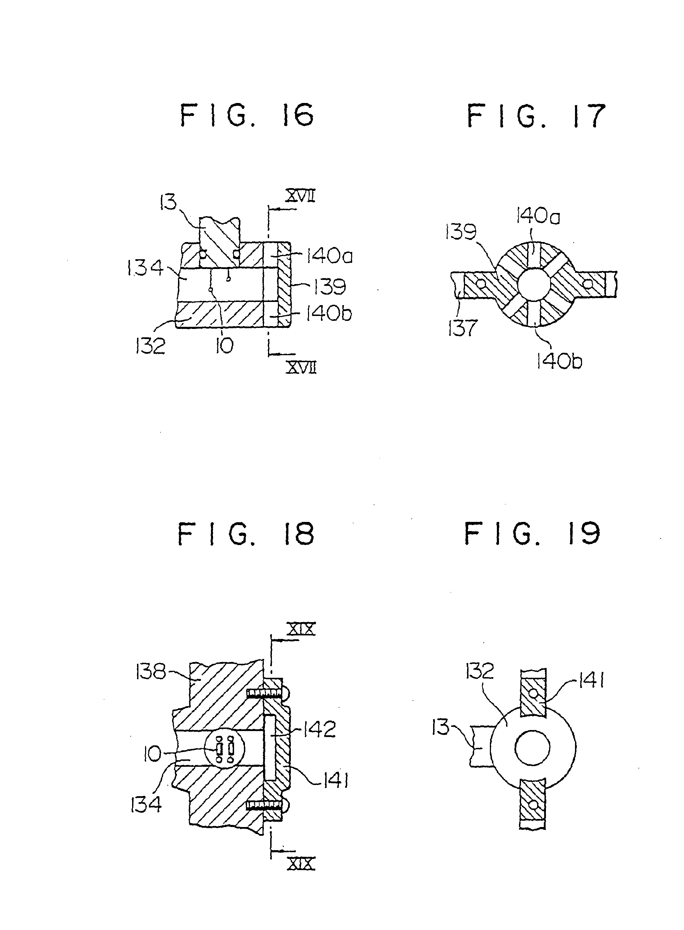

Figs. 16 and 17 show a seventh embodiment of the invention which is substantially of the same structure as that of the sixth embodiment. However, in the seventh embodiment, flow paths 140a, 140b or the like perpendicular to the primary flow are formed in the cover 139. According to this embodiment, since the flow path cross-section of each of the flow path 140a, 140b may be reduced, it is possible to further reduce the axial length.

Figs. 18 and 19 show an eighth embodiment of the invention which exhibits substantially the same structure as the sixth embodiment. However, in the eighth embodiment, the flow path 142 perpendicular to the primary flow is in the form of a disc, that is, if the bypass flow path 134 is included, the flow path 142 is in the form of a mushroom. According to this embodiment, it is possible to reduce the axial length in comparison with the seventh embodiment.

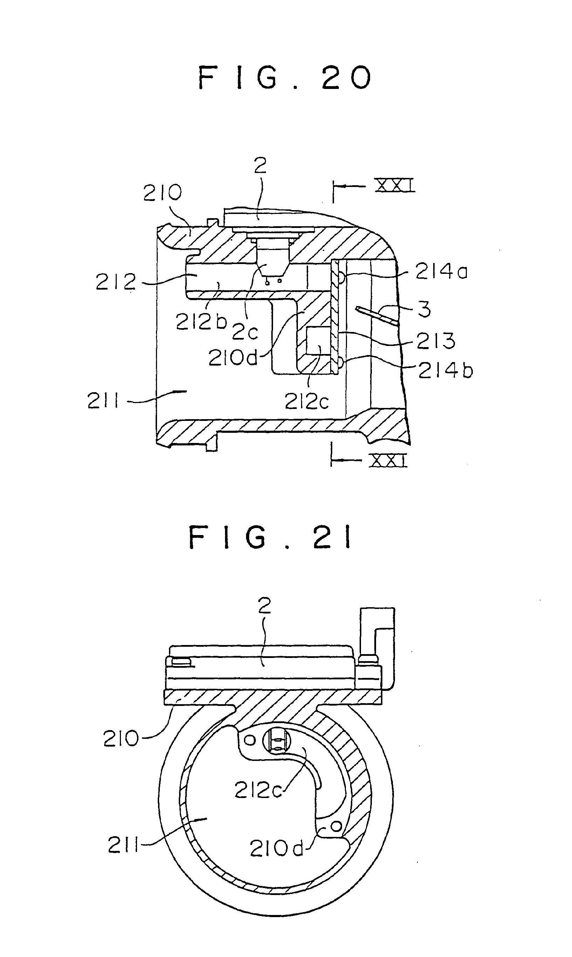

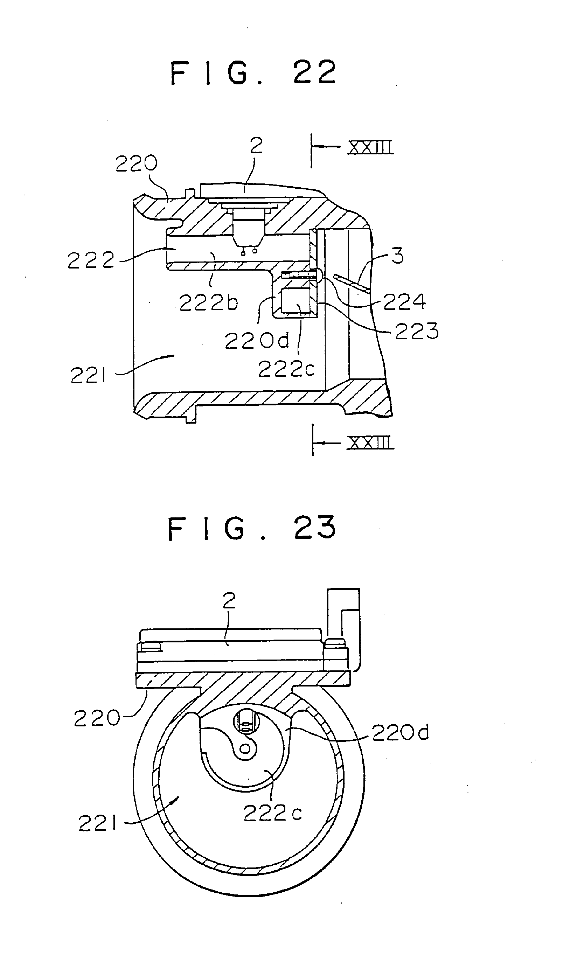

Figs. 20 and 21 show a ninth embodiment of the invention. The projecting portion 210d, provided with the auxiliary flow path 212, which is integral with the body 210 and projects into the primary flow path 211 forms an angle of about 90 degrees along the inner wall of the body. Therefore, the auxiliary flow path 212c extending perpendicular to the auxiliary flow path 212b which is parallel to the primary flow path 211 is oriented in the radial direction and in the circumferential direction to form a semicircular shape. The fluid resistance of the auxiliary flow path 212c is composed of the passage configuration resistance and the frictional resistance of the elbow passage having a square cross-section of small curvature of about 90 degrees and a substantially right-angled bend. By selecting the passage cross-sectional area of the auxiliary flow path 212c, it is possible to increase the fluid resistance of this part in comparison with the foregoing embodiment. The downstream wall of the auxiliary flow' path 212c against the primary flow is formed by the planar cover 213 which is fixed to the projecting wall 210d by means of bolts 214a and 214b. This embodiment relates to the case where an injector is to be disposed before the throttle valve 3 due to some reasons, for example, the application of a single point injection system, and the above-described arrangement is necessary. In this case, for instance, it may be the case that the throttle valve shaft is arranged at an angle of 45 .degrees with respect to the direction in which the molded portion 2c for holding the hot-wire element is oriented. This serves for reducing the pressure loss as a whole at high flow rates. The other effects of the ninth embodiment are the same as those of the first through third embodiments.

Figs. 22 and 23 show a tenth embodiment of the present invention. In this embodiment, it is intended that the auxiliary flow path having a relatively large fluid resistance is formed in the projecting portion having a relatively small volume. More specifically, a flow path 222c perpendicular to the auxiliary flow path 222d in which the hot-wire element is disposed is formed in a doughnut shape. With such an arrangement, the projecting portion 220d of the body 220 projecting into the primary flow path 221 is small in comparison with the flow passage length of the auxiliary flow path 222c. The wall of the auxiliary flow path 222c on the downstream side separating it from the primary flow is formed by a planar cover 223 fixed to the projecting portion 220 by a bolt 224 or the like. The flow resistance of the auxiliary flow path 222c is composed of the passage configuration resistance of an elbow having a square cross-section with a relatively high curvature of about 270 degrees and a substantially right-angled bend, and the frictional resistance of the somewhat longer passage length. Except for the case that the cross-section of the auxiliary flow path 222c is extremely increased, it is possible to increase the fluid resistance, i.e., the equivalent length of the passage in comparison with the foregoing embodiments. Thus, the arrangement of the tenth embodiment isavailable for an internal combustion engine in which the backblow is large, backfiring is likely to be generated, or the intake pulsations are large. The other effects of the tenth embodiment are the same as those of the first through third embodiments.

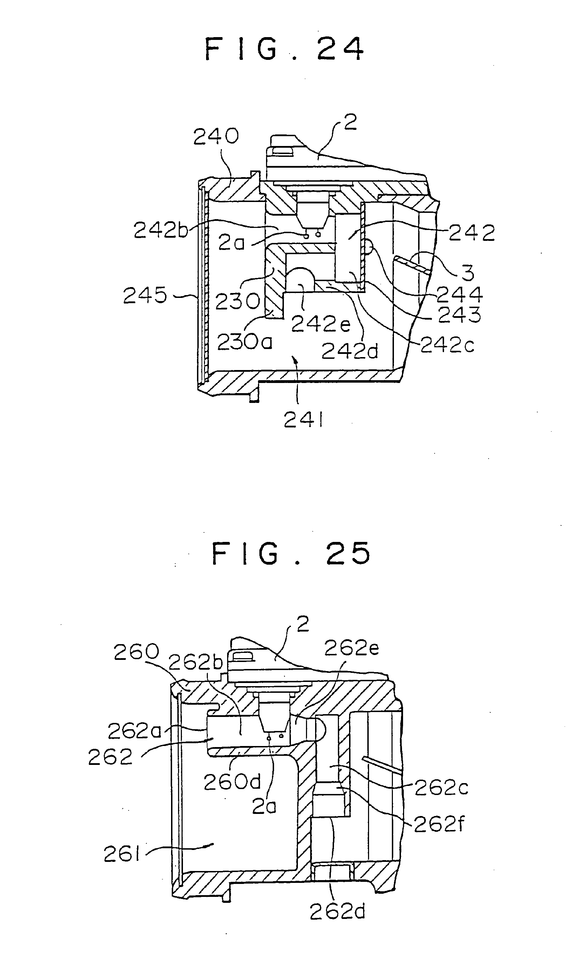

Fig. 24 shows an eleventh embodiment of the invention which realizes an auxiliary flow path having a relatively large fluid resistance with a structure in which the axial dimension is not increased. In a probe holder block 230 which is a member separate from the body 240 and is coupled to a circuit unit 2, the entire auxiliary flow path 242 is formed of an auxiliary flow path portion 242b in parallel to the primary flow path 241, an auxiliary flow path portion 242c having a square cross-section and extending perpendicular to the flow path 242b, an auxiliary flow path portion 242d directed to the upstream side against the primary flow, perpendicular to the auxiliary flow path 242c, and an auxiliary flow path portion 242e directed in the radial direction, perpendicular to the auxiliary flow path portion 242d. The downstream wall of the auxiliary flow path portion 242c relative to the primary flow is formed by a planar cover 243 which is fixed to the holder block 230 by means of a bolt 244. In this embodiment, since the length of the auxiliary flow path portion 242b upstream of the hot-wire element 2a is short due to its structure, a mesh member 245 is provided at the inlet opening of the body 240. Also, the upstream wall of the holder block 230 relative to the primary flow extends further into the primary flow path relative to the outlet 242e of the auxiliary flow path so that the primary flow is prevented from impinging directly to the outlet 242e of the auxiliary flow path, thus stabilizing the static pressure thereat and the flow within the auxiliary flow path to reduce the noise.

In this embodiment, the fluid resistance of the auxiliary flow path 242 is composed of the frictional resistance in proportion to the long passage length and the passage configuration resistance element composed of three right-angled bends'. The equivalent length of the passage the eleventh embodiment is longer than that of the tenth embodiment. In other words, this embodiment is strongly effective against backblowing, backfiring and intake pulsations such as the tenth embodiment. Also, if the fluid resistance of the auxiliary flow path, and in particular, the configuration resistance are increased, it is possible to decrease the flow rate distribution ratio of the auxiliary flow path to the primary flow path at high flow rates (high speed region). This makes it possible to reduce the flow rate in the vicinity of the hot-wire element which is available against contamination due to adhesion of dust or foreign matters.

In this embodiment, in view of the working formation of the auxiliary flow path 242, the auxiliary flow path 242 is formed separately from the body 240 and detachably mounted to the body 240. However, it is apparent that, if the formation of the auxiliary flow path portions 242c and 242e is carried out by boring from the outside of the body, it is possible to form the auxiliary flow path integrally with the body.

Fig. 25 shows a twelfth embodiment of the invention. According to this embodiment, it is possible to attain a simple structure which increases the fluid resistance of the auxiliary flow path as in the tenth to eleventh embodiments, that is, which is suitable for internal combustion engines suffering from a large backblowing or backfiring, or for internal combustion engines generating large intake pulsations, and which is advantageous against the adhesion of foreign matter for a long time. A throttle 262e is provided downstream of the hot-wire element 2a of the auxiliary flow path 262b extending in parallel to the primary flow, formed in the projecting portion 260d of the body 260, thereby reducing the cross-sectional area (diameter) of the auxiliary flow path portion 262c perpendicular to the primary flow relative to the auxiliary flow path portion 262b parallel to the primary flow path. Also, an enlarged portion 262f is provided before the outlet 262d of the auxiliary flow path portion 262c, so that the area of the outlet 262d is equal to that of the inlet 262a of the auxiliary flow path 262b.

By providing the throttle 262e and reducing the diameter of the flow path portion 262c to thereby add the passage configuration resistance of reduction and enlargement, it is possible to increase the fluid resistance of the auxiliary flow path downstream of the hot-wire element 2a, in particular, the fluid resistance against counter flow. Accordingly, it is possible to attain the foregoing effects. Also, the area of the outlet 262d is increased, and the cross-sectional area of the flow path portion 260d is set to a relatively large level, so that it is possible to reduce the static pressure loss due to the dynamic pressure change from the inlet to the outlet and it is possible to reduce the passage friction resistance of the flow path portion 260d. Thus, the flow rate distribution ratio in the low flow rate region may be relatively increased.

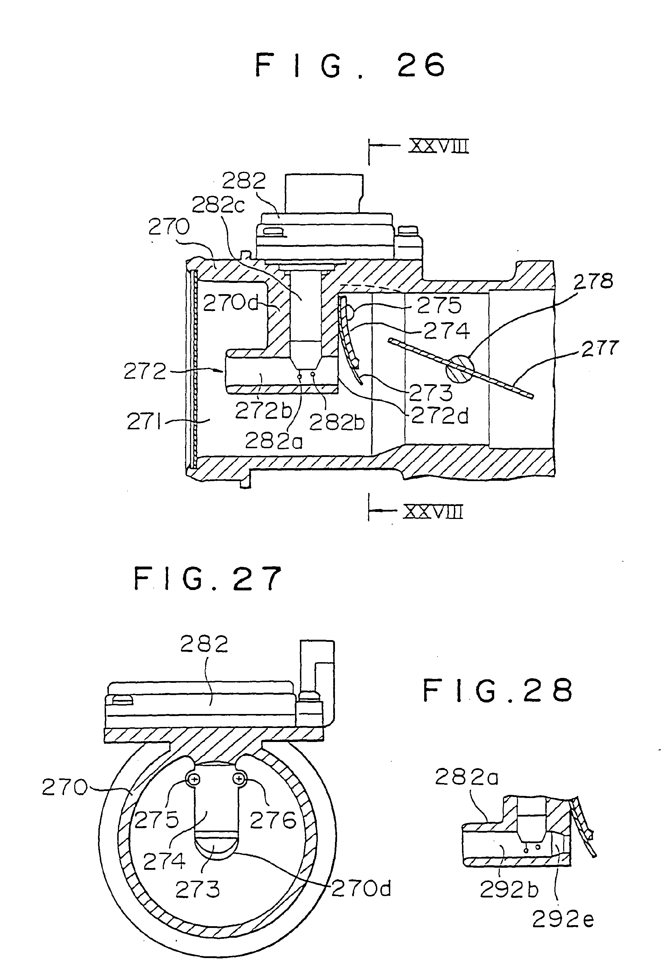

Figs. 26 to 28 show still another embodiment of the present invention.

The auxiliary flow path 272 opens to the central portion of the primary flow path 271 and is provided at a projecting portion 270d of the body 270. The auxiliary flow path 272b extends only parallel to the primary flow. The surface of the projecting portion 270d on the downstream side relative to the primary flow is made flat. On this surface, a check valve 273 is provided for closing the outlet 272d of the auxiliary flow path when the dynamic pressure of a counter flow is applied to that surface. The check valve 273 is backed up by a retainer 274 which has a shorter length than the check valve 273. The retainer 274 is fixed to the outlet portion 270d by means of bolts 275 and 276. The circuit unit 282 has a long molded portion 282c. A hot-wire element 282a and a temperature compensation element 282b are disposed in the auxiliary flow path 272b.

Owing to the above-described effect of the check valve, according to this embodiment, it is possible to realize a hot-wire type air-flow meter for internal combustion engines having a short axial dimension, in which the temperature characteristics are excellent. The air-flow meter is protected against backblowing or backfiring of the engine. However, in this arrangement, since the auxiliary flow path 272 has a short passage length, problems such as a small reduction of the pulsation and reduction of the flow rate in the high flow rate region arise.

Fig. 28 shows a partial modification of the embodiment shown in Fig. 26. In this embodiment, a throttle 292e is provided in the auxiliary flow path 292b downstream of the hot-wire element 282a whereby it is possible to reduce the flow rate within the auxiliary flow path 292b in the high flow rate region and to damp the pulsations to a certain extent.

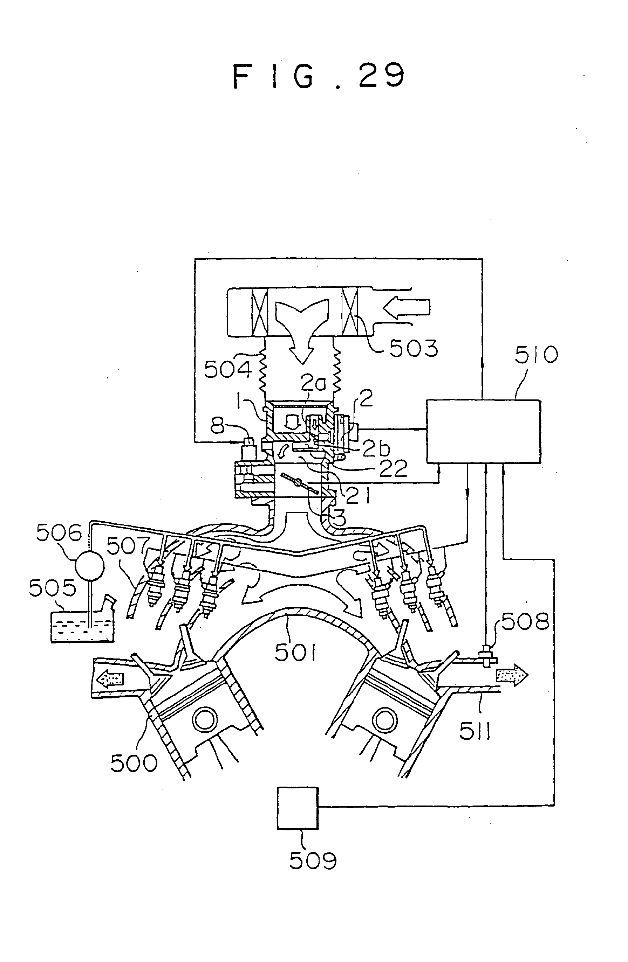

The internal combustion engine in which the invention is employed will be described with reference to Fig. 29. Fig. 29 shows the system of the internal combustion engine being provided with an electronic control type fuel injection unit to which the automotive hot-wire type air-flow meter according to the invention is applied.

Air for cylinders 500 is sucked through an air filter 503 and is made to flow through a connector pipe 504, the air-flow meter 1 and an intake manifold 501. The air-flow meter 1 is provided with an auxiliary flow path 22 projecting into the primary flow path 21. A hot-wire element 2a and a temperature compensation element 2b that is in unison with a circuit unit 2 are provided within the auxiliary flow path 22, thereby detecting the flow rate of air through this portion to obtain an output relative to the overall intake air-flow rate. A throttle valve 3 for controlling the intake air-flow rate, that is associated with the accelerator pedal of the vehicle is provided in the passage of the air-flow meter 1. Furthermore, an idle speed control (ISC) valve 8 for controlling the flow rate at fully closed throttle valve condition (idle speed) is disposed in the air-flow meter 1.

Fuel is injected into the intake manifold 501 from an injector 507 by an injection pump 506 coupled to a fuel reservoir 505 and is supplied to the engine 500 together with the air.

Into a control unit 510, there are put in the output signal of the hot-wire element circuit unit 2, a rotational angle signal of the throttle valve 3, the output signal of an oxygen concentration sensor 508 provided in the exhaust manifold 511, the output signal of an engine rotational speed (rpm) sensor 509, and the like. Thus, the fuel injection amount and the ISC valve opening degree are calculated. In response to the calculation results, the injector 507, the ISC valve 8 and the like are controlled. Also, a data table of the fuel injection amounts corresponding to the intake air flow rate and the engine rotational speed is stored in the control unit 510, so as to immediately determine the intake air-flow rate on the basis of the hot-wire element and the fuel injection amount on the basis of the engine speed signal from the engine rotational speed sensor, thus controlling the amount of fuel to be injected from the injection unit.

## Claims

1. An air flow meter having an element which detects an air flow rate comprising a block (230) in which an auxiliary flow path (242) is formed,
wherein the block (230) is inserted through a wall of a body (240) forming a primary flow path (241) and constituting an intake air passage of an internal combustion engine in a cantilever condition in the primary flow path (241),
wherein the auxiliary flow path (242) having an inlet portion directed against the direction of the primary air flow in the primary flow path (242) and having a curved portion, wherein the block (230) is detachably mounted to the body (240).

2. Air flow meter according to claim 1, **characterized in that** the inlet portion of the auxiliary flow path (242) is located closer to an insertion opening in the wall of the body (240) than the outlet portion.

3. Air flow meter according to at least one of claims 1 and 2, **characterized in that** a circuit unit (2) is coupled to the block (230).

4. Air flow meter according to at least one of claims 1 to 3, **characterized in that** a sensor (2a) electrically connected to the circuit unit (2) is inserted into the auxiliary flow path (242) through a wall of a first path portion (242b) being adjacent to the circuit unit (2), wherein the auxiliary flow path (242) includes the first path portion (242b) and a second path portion (242c) being connected downstream of the first path portion (242b) and being directed radially away from the circuit unit (2).

5. Air flow meter according to at least one of claims 1 to 3, **characterized in that** the sensor (2a) is offset from the center axis of the primary flow path (241).

6. Air flow meter according to at least one of claims 1 to 5, **characterized in that** the auxiliary flow path (242) includes a third path portion (242d) being parallel to the first path portion (242b), in the body (240) and directed to the upstream side of the primary flow in the primary flow path (241).

7. Air flow meter according to at least one of claims 1 to 6, **characterized in that** the auxiliary flow path (242) includes a fourth path portion (242e) directed in a radial direction of the primary flow path (241) perpendicular to the third path portion (242d).

8. Air-flow meter according to at least one of claims 1 to 7, **characterized in that** the air flowing in the auxiliary flow path (242) enters the auxiliary flow path at the upstream side of the first path portion (242b) and exits the auxiliary flow path (242) at the downstream side of the fourth path portion (242e).

9. Air-flow meter according to at least one of claims 1 to 8, **characterized in that** the first path portion (242b) is offset from the center axis of the primary flow path (241) in a direction towards the circuit unit (2).

10. Air-flow meter according to at least one of claims 1 to 9, **characterized in that** the upstream wall of the block (230) relative to the primary flow extends further into the primary flow path (241) relative to the outlet of the fourth path portion (242e).
